(19) Europäisches Patentamt
European Patent Office
Office européen des brevets

(11) Veröffentlichungsnummer: **0 176 980**
**B1**

# (12) EUROPÄISCHE PATENTSCHRIFT

(45) Veröffentlichungstag der Patentschrift: **12.10.88**

(51) Int. Cl.⁴: **A 22 C 13/00**

(21) Anmeldenummer: **85112284.6**

(22) Anmeldetag: **27.09.85**

(54) **Schlauchförmige Verpackungshülle, insbesondere Wursthülle, auf Polyamidbasis.**

(30) Priorität: **05.10.84 DE 3436682**

(43) Veröffentlichungstag der Anmeldung:
**09.04.86 Patentblatt 86/15**

(45) Bekanntmachung des Hinweises auf die Patenterteilung:
**12.10.88 Patentblatt 88/41**

(84) Benannte Vertragsstaaten:
**AT BE CH DE FR GB IT LI LU NL SE**

(56) Entgegenhaltungen:
**EP-A-0 065 278**
**EP-A-0 113 136**
**AU-A-511 195**
**DE-A-2 724 252**
**FR-A-2 441 558**

(73) Patentinhaber: **HOECHST AKTIENGESELLSCHAFT, Postfach 80 03 20, D-6230 Frankfurt am Main 80 (DE)**

(72) Erfinder: **Strutzel, Hans, Edisonstrasse 12, D-6200 Wiesbaden (DE)**

**EP 0 176 980 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

**Beschreibung**

Die Erfindung bezieht sich auf eine schlauchförmige Verpackungsfolie, insbesondere auf eine Wursthülle für Brüh- und Kochwurst, auf Polyamidbasis, die gegenüber den bekannten Polyamidschläuchen verbesserte physikalische Eigenschaften aufweist und für Verpackungszwecke vorteilhaft einsetzbar ist, insbesondere jedoch zur Verwendung als faltenfreie, deformationsbeständige Wursthülle für Brüh- und Kochwürste geeignet ist.

Es sind schon zahlreiche Schlauchfolien aus synthetischem Kunststoff, z. B. auf Polyester- oder Polyamidbasis, bekannt geworden, z. B. aus der DE-A-2 724 252. Gerade aber bei Wursthüllen werden hohe Anforderungen gestellt, die sich insbesondere auf ihre physiologische Eignung, Festigkeit und Formstabilität beziehen.

Ein Mangel, den Schlauchfolien aus vielen synthetischen Materialien aufweisen, ist ihre verringerte Festigkeit infolge Wasseraufnahme. In vielen Fällen ist das Füllgut wasserhaltig und gibt an die anliegende Verpackungsfolie Feuchtigkeit ab. Insbesondere beim Brühen oder Kochen der mit Wurstbrät gefüllten Schlauchhüllen, wenn das Folienmaterial mit heißem Wasser bzw. Wasserdampf in Kontakt tritt, sinkt dann nachteiligerweise die Festigkeit des Folienmaterials infolge Wasseraufnahme stark ab.

Werden die an ihrer Halteschlaufe aufgehängten Würste im Kochschrank mit heißem Wasserdampf behandelt, so wird die Wursthülle durch das Gewicht der eingefüllten Füllmasse im unteren Teil stark belastet und bei zu geringer Formbeständigkeit des Hüllenmaterials aufgedehnt, so daß aus der ursprünglich zylinderförmigen Wurst ein birnenförmig deformiertes Produkt entsteht.

Zum Ausgleich dieses unerwünschten Effektes wurde bisher die Dicke der Verpackungsfolie entsprechend vergrößert oder durch aufwendige Verfahrensschritte bei der Schlauchherstellung versucht, die Folienfestigkeit zu erhöhen.

Mit diesen Maßnahmen läßt sich jedoch die bei Koch- bzw. Brühtemperatur verringerte Festigkeit des Hüllenmaterials nur in begrenztem Maße verbessern, so daß der Widerstand des Hüllenmaterials gegen eine Formänderung bei dieser Temperatur nur in geringem Umfang erhöht wird. Bei zu großer Dicke des Hüllenmaterials besteht außerdem die Gefahr, daß die Verpackungshülle zu steif und unelastisch wird. Sie kann sich dann beim Einpressen der Füllmasse nur unzureichend ausdehnen und paßt sich nach dem Koch- bzw. Brühvorgang im abgekühlten Zustand nur unzureichend an den geschrumpften Inhalt an, so daß das erhaltene Produkt faltig und unansehnlich aussieht.

Es ist somit Aufgabe der Erfindung, eine schlauchförmige Verpackungsfolie, insbesondere Wursthülle für Brüh- und Kochwurst, auf Polyamidbasis anzugeben, die den hohen Anforderungen bezüglich der Formstabilität beim Behandeln mit heißem Wasser und hinsichtlich des faltenfreien Aussehens des hitzebehandelten, abgekühlten Produkts genügen kann, wobei dieses Problem mit geringem Aufwand und einfachen Mitteln gelöst werden soll.

Diese Aufgabe wird gelöst durch die im Patentanspruch 1 angegebene Verpackungsfolie. Die Unteransprüche geben bevorzugte Ausführungsformen der Folie an.

Die schlauchförmige Verpackungsfolie ist einschichtig aufgebaut und besteht im wesentlichen aus einem Polymergemisch mit zwei Hauptkomponenten, nämlich dem Polyamid-und dem Polyesteranteil. Das Polyamid ist ein zur Herstellung von schlauchförmigen Verpackungsfolien übliches gesättigtes lineares aliphatisches Polyamid mit der allgemeinen Formel $-[-NH-CO-R^1-CO-NH-R^2-]-$, in der $R^1$ und $R^2$ gleich oder verschieden sind und $-(CH2)_n-$ ($n = 2-7$) bedeuten, beispielsweise Polyhexamethylenadipinsäureamid ($R^1 = (CH_2)4$, $R^2 = (CH_2)_6$), oder ein Polyamid mit der allgemeinen Formel $-[-NH-R^3-CO-]-$, wobei $R^3$ gleich $-(CH2)_n-$ ($n = 2-7$, insbesondere 4-6) ist, vorzugsweise Polycaprolactam ($R^3 = (CH_2)_5$), sowie statistische Copolyamide, die aus Einheiten dieser Polymeren und unter Verwendung von Adipinsäure, Azelainsäure, Sebacinsäure sowie Terephthalsäure und Diaminen, wie Hexamethylendiamin oder Trimethylhexamethylendiamin, hergestellt werden. Ein bevorzugtes Copolyamid ist aus Caprolactam, Hexamethylendiamin und Adipinsäure hergestellt. Der Polyamidanteil kann auch als Mischung aus verschiedenen Polyamiden vorliegen. Von den vorstehend genannten Polyamiden ist Polycaprolactam (Polyamid 6) besonders bevorzugt. Für Blasextrusionszwecke werden Polyamide mit einer relativen Viskosität im Bereich von etwa 2,5 bis 4,5, insbesondere 2,8 bis 4-2, gemessen in Schwefelsäure (96 %-ig/20° C) verwendet.

Der in der Polymermischung des Hüllenmaterials vorhandene Polyester ist ein Polyterephthalsäureester, ein Copolyester mit Terephthalsäure und Isophthalsäureeinheiten oder eine Mischung aus Polyterephthalsäureester und diesem Copolyester. Der Anteil der Isophthalsäureeinheiten im Copolyester beträgt vorzugsweise maximal 20 Mol%. Diese Polyester sind bekanntlich Kondensationsprodukte von Diolen mit Terephthalsäure bzw. von Diolen mit Terephthalsäure und Isophthalsäure. Die Diole sind insbesondere aliphatische Verbindungen der Formel $HO-(CH_2)_n-OH$ ($n = 2 - 6$), wie Äthylenglykol, 1,4-Butylenglykol, 1,3-Propylenglykol oder Hexamethylenglykol und alicyclische Verbindungen wie 1,4-Cyclohexandimethanol. Ganz besonders bevorzugt wird Polybutylenterephthalat (PBTB) in der Polymermischung verwendet, wobei das Polymere eine zur Folienextrusion übliche, mittlere Schmelzviskosität aufweist.

Das zugesetzte Polyterephthalat bzw. Polyisophthalat kann in geringem Umfang mit aliphatischen Dicarbonsäuren modifiziert sein.

Wenn auch der mögliche Anteil des Polyesters in der aus Polyamid/Polyester bestehenden Polymermischung 70 bis 5 Gew.-% betragen kann, so hat sich doch gezeigt, daß in diesem Bereich bei Werten zwischen 50 und 25 Gew.-% Polyesteranteil eine Verschlechterung der Folieneigenschaften eintritt.

Insbesondere neigt der extrudierte Folienschlauch vor und während des Streckvorgangs zum Spleißen. Dieser Nachteil tritt in dem anderen Konzentrationsbereich (70-50, 25-5 Gew.-%) nicht auf. Insbesondere sind Polyesteranteile von 65 bis 50 und 25 bis 10 Gew.-% in der Polymermischung von besonderem Vorteil.

Bei dem besonders niedrigen Anteil des Polyesters von 25 bis 10 Gew.-% erhält man besonders faltenfreie Wursthüllen, die ohne Zusatz eines Antiblockmittels gute Gleiteigenschaften zeigen.

Die Polymermischung kann noch weitere Zusätze enthalten, wie z. B. Farbstoffe, Pigmente und Verarbeitungshilfsmittel, die ein störungsfreies Herstellungsverfahren gewährleisten.

Als besonders vorteilhafter Zusatz haben sich Silikonöle, insbesondere Polydialkylsiloxan (Alkyl = $C_1$-$C_4$), erwiesen, die in einer Menge von 0,05 bis 1,2, insbesondere 0,1 bis 0,6 Gew.-%, bezogen auf die Polymermischung aus Polyester und Polyamid, eingesetzt werden. Ein besonders geeignetes Polydialkylsiloxan ist Polydimethylsiloxan mit einer Viskosität von 10 bis 100.000, insbesondere 500 bis 30.000 $mm^2/s$ (23° C). Dieser Zusatz bewirkt überraschenderweise verbesserte Gleiteigenschaften der Folie bei ihrer Herstellung, ohne daß dadurch die Kristallisation der Polymeren vor dem Streckvorgang nachteiligerweise beschleunigt wird.

Die Verpackungsfolie hat eine Wandstärke zwischen 10 und 50 μm. Sie wird bevorzugt in biaxial orientierter Form eingesetzt. Zu ihrer Herstellung bedient man sich der bei der Polyamidfolienherstellung bekannten Maßnahmen.

Zunächst werden die einzelnen Komponenten miteinander vermischt. Es ist aber auch möglich, den Mischvorgang in der Extrusionsvorrichtung vorzunehmen. Die nach dem Blasfolienverfahren extrudierte schlauchförmige Vorfolie wird durch Aufblasen und Wegziehen simultan biaxial gestreckt. Um eine thermostabile Folie zu erhalten, wird sie nach dem Strecken auf übliche Weise thermofixiert. Die erhaltene Folie hat eine Dicke von 10 bis 50, insbesondere 25 bis 45 μm.

Zur Verpackung von pastösen Lebensmitteln wird sie in Abschnitten, in geraffter Form oder in gebogener Form als sogenannter "Kranzdarm" eingesetzt. Das Raffen erfolgt mit bekannten Raffvorrichtungen. Beim Einpressen des pastösen Füllgutes wird der geraffte Schlauch entrafft. Bei der anschließenden Haltbarmachung des Füllgutes unter Einwirkung von heißem Wasser bleibt der gleichmäßige Querschnitt der Verpackungshülle erhalten, und nach dem Abkühlen erhält man prall gefüllte, faltenfreie Verpackungen. Die Verpackungshülle zeigt somit sowohl ausgezeichnete Deformationsbeständigkeit bei Einwirkung von heißem Wasser als auch soweit ausreichendes elastisches Rückdehnungsvermögen, um sich eng an das abgekühlte Füllgut anlegen zu können. Überraschenderweise sind diese Eigenschaften auch bei relativ großen Schlauchkalibern von 90 - 120 mm noch vorhanden, so daß die Verpackungshülle auch als Wursthülle für besonders große und schwere Würste geeignet ist.

Die Erfindung wird durch das nachfolgende Beispiel näher erläutert.

**Beispiel**

Eine Granulatmischung aus 78 Gew.-Tl. Polyamid 6 und 22 Gew.-Tl. Polybutylenterephthalat werden gemeinsam mit 0,3 Gew.-Tl. Polydimethylsiloxan (Visk. 1000 $mm^2/s$) in einem Extruder bei ca. 240° C plastifiziert und durch eine Runddüse zu einem Schlauch von 30 mm Durchmesser geformt. Der durch Abschrecken mit einem Kühldorn amorph gehaltene Schlauch wird dann sofort anschließend mittels IR-Strahlern auf Strecktemperatur gebracht, mit Hilfe eines Gaspolsters im Schlauchinnern in beiden Richtungen unter Dickenverringerung und Flächenvergrößerung verstreckt und in diesem Zustand thermofixiert. Nach dem Flachlegen wird der Schlauch mit einer flachliegenden Breite von 145 mm und einer Dicke von 36 μm aufgewickelt.

Zur Prüfung der Deformationsbeständigkeit wird aus dem Schlauch in Querrichtung ein 1 cm breiter Streifen herausgeschnitten, der mit der Belastung $K_1$ sowohl bei 20°C als auch bei 80°C in Wasser gedehnt wird. Die Belastung $K_1$ errechnet sich aus

$$K_1 = \frac{p \cdot r \cdot A}{d} = 18N$$

p = Innendruck = 0,04 $N/mm^2$
r = halbes Kaliber = 45 mm
d = Dicke = 0,036 mm
A = Querschnitt = 0,36 $mm^2$

Für die Umfangsänderung gilt, wenn
$l_0$ = Länge des Probestreifens vor dem Dehnen,
$l_1$ = Länge nach Belastung mit $K_1$ bei 20° C,
$l_2$ = Länge nach Belastung mit $K_1$ bei 80° C.

$$0{,}8 < \frac{l_1 - l_0}{l_2 - l_1} < 1{,}2 .$$

Wird der Probestreifen nach beiden Dehnungen entlastet, liegt die neue Länge $l_3$ bei Werten von 0,95 · $l_1$ bis 0,98 · $l_1$.

**Patentansprüche**

1. Schlauchförmige Verpackungsfolie, insbesondere Wursthülle für Brüh- und Kochwurst, auf Polyamidbasis, dadurch gekennzeichnet, daß sie im wesentlichen aus einer Polymermischung mit 30 bis 95 Gew.-% Homo- oder Copolyamidanteil und 70 bis 5 Gew.-% Anteil an Polyester aufgebaut ist, daß der Polyesteranteil aus Polyterephthalsäureester, Copolyester oder Mischungen davon besteht und der Copolyester Terephthalsäure- und Isophthalsäureeinheiten enthält, wobei der Anteil der Isophthalsäureeinheiten im Copolyester vorzugsweise maximal 20 Mol-% beträgt.

2. Verpackungsfolie nach Anspruch 1, dadurch gekennzeichnet, daß der Polyester das Kondensationsprodukt von Terephthalsäure bzw. Isophthalsäure und Diolen der Formel

HO-R-OH

ist, wobei R = $(CH_2)_n$ (n = 2 - 6)

oder R = -$CH_2$- FIGFIG -$CH_2$- bedeutet.

3. Verpackungsfolie nach Anspruch 2, dadurch gekennzeichnet, daß R = $(CH_2)_4$.

4. Verpackungsfolie nach einem der Ansprüche 1 bis 3, dadurch gekennzeichnet, daß das Homo- oder Copolyamid aus

(A) -[-NH-CO-$(CH_2)_x$-CO-NH-$(CH_2)_y$-]- oder

(B) -[-NH-CO-$(CH2)_z$-]-

Einheiten aufgebaut ist, wobei x, y und z 2 bis 7 ist, vorzugsweise Einheiten der Formel (B) mit z = 5 enthält.

5. Verpackungsfolie nach einem der Ansprüche 1 bis 4, dadurch gekennzeichnet, daß der Anteil des Homo- oder Copolyamids in der Polymermischung 30 bis 50 und 75 bis 95 Gew.-%, insbesondere 35 bis 50 und 75 bis 90 Gew.-% beträgt.

6. Verpackungsfolie nach einem der Ansprüche 1 bis 5, dadurch gekennzeichnet, daß die Polymermischung als Polyamidanteil Polycaprolactam und als Polyesteranteil Polybutylenterephthalat enthält.

7. Verpackungsfolie nach einem der Ansprüche 1 bis 6, dadurch gekennzeichnet, daß sie - bezogen auf die Polymermischung - 0,05 bis 1,2, vorzugsweise 0,1 bis 0,6 Gew.-% eines Polysiloxans, insbesondere Polydimethylsiloxan mit einer Viskosität von 10 bis 100.000 $mm^2/s$ (23° C) enthält.

8. Verpackungsfolie nach einem der Ansprüche 1 bis 7, dadurch gekennzeichnet, daß das Verhältnis aus der Zunahme des Hüllenumfangs durch das Einfüllen von Füllgut bei 20° C und der weiteren Zunahme des Hüllenumfangs beim anschließenden Behandeln mit heißem Wasser (80° C) bei Werten zwischen 0,8 bis 1,2 liegt.

9. Verpackungsfolie nach einem der Ansprüche 1 bis 8, dadurch gekennzeichnet, daß sie aus einem zylinderförmigen oder kranzförmigen Schlauch besteht, der gegebenenfalls gerafft ist.

**Claims**

1. Tubular packaging film, in particular sausage casing for scalded and cooked sausages, on a basis of polyamide, wherein the packaging film substantially comprises a polymer mixture composed of a 30 to 95 % by weight proportion of homopolyamide or copolyamide and a 70 to 5 by weight proportion of polyester, the proportion of polyester comprises a polyterephthalic acid ester, a copolyester or mixtures thereof and the copolyester contains terephthalic acid units and isophthalic acid units, the proportion of isophthalic acid units in the copolyester preferably amounting to not more than 20 mole-%.

2. A packaging film as claimed in claim 1, wherein the polyester is the condensation product of terephthalic acid or isophthalic acid with diols corresponding to to the formula

HO-R-OH,

wherein R = $(CH_2)_n$ (n = 2 to 6)

or R = -$CH_2$- FIGFIG -$CH_2$

3. A packaging film as claimed in claim 2, wherein R = $(CH_2)_4$.

4. A packaging film as claimed in any of claims 1 to 3, wherein the homopolyamide or copolyamide comprises units of

(A) -[-NH-CO-$(CH_2)_x$-CO-NH-$(CH_2)_y$-]- or

(B) -[-NH-CO-$(CH_2)_z$-]-

wherein x, y and z stand for 2 to 7, and preferably contains units according to formula B, in which z = 5.

5. A packaging film as claimed in any of claims 1 to 4, wherein the proportion of the homopolyamide or copolyamide in the polymer mixture is in the range from 30 to 50 % by weight and from 75 to 95 % by weight,

in particular from 35 to 50 % by weight and from 75 to 90 % by weight.

6. A packaging film as claimed in any of claims 1 to 5, wherein the polymer mixture comprises as the polyamide proportion a polycaprolactam and as the polyester proportion a polybutylene terephthalate.

7. A packaging film as claimed in any of claims 1 to 6, which contains - relative to the polymer mixture - 0.05 to 1.2, preferably 0.1 to 0.6, by weight of a polysiloxane, in particular a polydimethylsiloxane, having a viscosity ranging from 10 to 100,000 $mm^2/s$ (23° C).

8. A packaging film as claimed in any of claims 1 to 7, wherein the ratio between the increase of the casing circumference resulting from the filling with a material to be packaged at 20° C and the further increase of the casing circumference in the following treatment with hot water (80° C) has values ranging between 0.8 and 1.2.

9. A packaging film as claimed in any of claims 1 to 8, which comprises a cylindrical or ring-shaped tubing which is optionally shirred.

## Revendications

1. Feuille de conditionnement en forme de boyau, en particulier enveloppe pour saucisse, à base de polyamide, pour saucisses à bouillir et saucisses à cuire, caractérisée en ce qu'elle est essentiellement constituée d'un mélange de polymères contenant de 30 à 95 % en poids d'homo- ou copolyamide et de 70 à 5 % en poids de polyester, en ce que la fraction polyester consiste en un polytéréphtalate, un copolyester ou des mélanges de ceux-ci, et le copolyester contient des motifs acide téréphtalique et acide isophtalique, la proportion des motifs acide isophtalique dans le copolyester étant de préférence de 20 % en mole au maximum.

2. Feuille de conditionnement selon la revendication 1, caractérisée en ce que le polyester est le produit de condensation d'acide téréphtalique ou acide isophtalique et de diols de formule

HO-R-OH,

dans laquelle $R = (CH_2)_n$ (n= 2 à 6) ou

$R = -CH_2$ - FIGFIG $-CH_2-$

3. Feuille de conditionnement selon la revendication 2, caractérisée en ce que $R = (CH_2)_4$.

4. Feuille de conditionnement selon l'une des revendications 1 à 3, caractérisée en ce que l'homo- ou le copolyamide est composé de motifs

(A) $-[-NH-CO-(CH_2)_x-CO-NH-(CH_2) -]-$ ou

(B) $-[-NH-CO-(CH_2)_z]-$

x, y et z valant de 2 à 7, et contient de préférence des motifs de formule (B) avec z = 5.

5. Feuille de conditionnement selon l'une des revendications 1 à 4, caractérisée en ce que la proportion de l'homo- ou du copolyamide dans le mélange de polymères va de 30 à 50 et de 75 à 95 % en poids, en particulier de 35 à 50 et de 75 à 90 % en poids.

6. Feuille de conditionnement selon l'une des revendications 1 à 5, caractérisee en ce que le mélange de polymères contient en tant que fraction polyamide un polycaprolactame, et en tant que fraction polyester, du polytéréphtalate de butylène.

7. Feuille de conditionnement selon l'une des revendications 1 à 6, caractérisee en ce qu'elle contient, par rapport au mélange de polymères, 0,05 à 1,2, de préférence de 0,1 à 0,6 % en poids d'un polysiloxane, en particulier d'un polydiméthylsiloxane ayant une viscosité de 10 à 100 000 $mm^2/s$ (à 23° C).

8. Feuille de conditionnement selon l'une des revendications 1 à 7, caractérisée en ce que le rapport de l'augmentation de circonférence de l'enveloppe, due à l'introduction de matière de remplissage à 20° C, à l'augmentation ultérieure de circonférence de l'enveloppe, due au traitement subséquent avec de l'eau chaude (à 80° C) se situe à des valeurs comprises entre 0,8 et 1,2.

9. Feuille de conditionnement selon l'une des revendications 1 à 8, caractérisée en ce qu'elle consiste en un boyau cylindrique ou en forme de couronne, qui est éventuellement plissé.